# EUROPÄISCHE PATENTSCHRIFT

(11) **EP 3 134 671 B1**
(45) Veröffentlichungstag und Bekanntmachung des Hinweises auf die Patenterteilung: **01.08.2018**
(21) Anmeldenummer: 15704205.2
(22) Anmeldetag: 31.01.2015
(51) Int. Cl.: F16L 33/207

(54) **SCHLAUCHKUPPLUNG**
HOSE COUPLING
RACCORD POUR TUYAU FLEXIBLE

(30) Priorität: 19.04.2014 DE 202014003383 U
(43) Veröffentlichungstag der Anmeldung: 01.03.2017
(73) Patentinhaber: Neoperl GmbH, 79379 Müllheim (DE)
(72) Erfinder: KURY, Werner, 79379 Müllheim (DE); SCHERER, Michael, 79227 Schallstadt-Mengen (DE)
(74) Vertreter: Börjes-Pestalozza, Henrich
(86) Internationale Anmeldenummer: PCT/EP2015/000189
(87) Internationale Veröffentlichungsnummer: WO 2015/158404

(56) Entgegenhaltungen:
- WO-A1-2014/139841
- US-A- 2 139 745
- US-A- 4 330 142

## Beschreibung

Die Erfindung betrifft eine Schlauchkupplung, die hülsenförmig ausgestaltet ist, und die an wenigstens einem Kupplungsende einen Anschlussstutzen mit einer, zumindest in einem Stutzen-Teilbereich außenumfangsseitig vorgesehenen Halteprofilierung aufweist, die durch am Außenumfang des Anschlussstutzens vorgesehene Haltenuten gebildet ist, die in Stutzen-Umfangsrichtung orientierte Nut-Längsseiten und in Stutzen-Längsrichtung orientierte Nut-Schmalseiten haben, wobei auf das Kupplungsende ein Schlauchende eines flexiblen Schlauches aufschiebbar und dort mittels einer das Schlauchende umspannenden Quetschhülse gehalten ist, wobei zumindest in einem Teilbereich des Anschlussstutzens auf wenigstens zwei Umfangslinien angeordnete Haltenuten vorgesehen sind, und wobei die einander zugewandten Nut-Längsseiten der auf benachbarten Umfangslinien angeordneten Haltenuten voneinander beabstandet sind.

Im Sanitärbereich werden anstelle von dünnen Kupferrohren zunehmend flexible Schlauchleitungen verwendet, um die Wasserzufuhr beispielsweise von einem Eckventil zu einem Handwaschbecken oder dergleichen Wasserverbrauchsstelle zu bewerkstelligen. Um den flexiblen Schlauch mit dem Eckventil oder dergleichen Wasserzuleitung und/oder mit der Wasserverbrauchsstelle zu verbinden, ist eine Schlauchkupplung der eingangs erwähnten Art erforderlich.

Die vorbekannten Schlauchkupplungen sind regelmäßig hülsenförmig ausgebildet und weisen an ihrem einen Ende ein Anschlussgewinde oder eine Überwurfmutter auf, während an dem anderen Kupplungsende ein Anschlussstutzen vorgesehen ist. Dieser Anschlussstutzen weist zumindest in einem Stutzen-Teilbereich außenumfangsseitig eine Halteprofilierung auf, so dass auf dieses profilierte Kupplungsende eines der beiden Schlauchenden eines flexiblen Schlauches aufgeschoben werden kann. Diese Halteprofilierung ist häufig aus wenigstens einem Ringflansch gebildet, der sich zu seinem Außenumfang hin in Richtung zum freien Stutzenende derart verjüngt, dass sich das Schlauchende leicht aufschieben lässt. Nachteilig ist jedoch, dass ein solcher außenumfangsseitig spritz zulaufender Ringflansch wie eine umlaufende Schneidkante wirkt. Wird auf die Schlauchleitung ein Drehmoment ausgeübt und wird der Anschlussstutzen relativ zur Schlauchleitung verdreht, besteht die Gefahr, dass sich der zumindest eine Ringflansch in den Schlauchinnenumfang der Schlauchleitung eingräbt, was mit einer Undichtigkeit oder mit einer reduzierten Berstsicherheit der Schlauchleitung verbunden sein kann.

Aus der US-A-4 330 142 ist eine hülsenförmige Schlauchkupplung vorbekannt, welche an ihrem einen Kupplungsende einen Anschlussstutzen mit einer Halteprofilierung aufweist, die zumindest in einem Stutzen-Teilbereich außenumfangsseitig vorgesehen ist. Auf das diese Halteprofilierung tragende Kupplungsende ist ein Schlauchende eines flexiblen Schlauches aufschiebbar. Um diese Halteprofilierung in das Kupplungsende der vorbekannten Schlauchkupplung einformen zu können, werden meiselförmige Prägewerkzeuge verwendet, die mit geringem Abstand zueinander auf einer Umfangslinie um das Kupplungsende herum angeordnet sind und die an ihrem freien Prägeende konvex, konkav oder geradlinig ausgebildet sein können. Diese Prägewerkzeuge werden in radialer Richtung auf das Kupplungsende zugefahren und in das Kupplungsende formgebend eingedrückt, bis das Kupplungsende die zum freien Prägeende der Prägewerkzeuge komplementäre Form annehmen. Dabei verdrängen die Prägewerkzeuge mit ihrem freien Prägeende Material, das an dem fertiggestellten Kupplungsende zwischen benachbarten Einprägungen als in Längsrichtung des Kupplungsendes vorstehende Stege ausgeformt wird. Da das von den Prägewerkzeugen verdrängte Material zwischen benachbarten Einprägungen stegförmig vorsteht, während die freien Prägeenden der Prägewerkzeuge sich in das Material tief eindrücken, wird das Aufschieben eines Schlauchendes durch die vorstehenden Stege einerseits und die tief eingeformten Einprägungen andererseits erheblich erschwert.

So ist in Figur VII der US-A-4 330 142 ein Ausführungsbeispiel für einen Anschlussstutzen dargestellt, der mittels meißelförmiger Prägewerkzeuge geformt wird, die an ihrem Innenumfang im Querschnitt kegel- oder kegelstumpfförmige Erhebungen haben. Nach dem Einpressen dieser Prägewerkzeuge in das für einen Anschlussstutzen bestimmte hülsenförmige Material bilden sich an diesem Anschlussstutzen umlaufende und in Längsrichtung voneinander beabstandete Haltenuten aus. Auch bei diesem, in Figur 7 der US-A-4 330 142 gezeigten Ausführungsbeispiel steht in jeder der Haltenuten das von den Prägewerkzeugen in die Trennebenen benachbarter Prägewerkzeuge verdrängte Material derart vor (vgl. Figur VIII in der US-A-4 330 142), dass es sich weit über den Hülsen-Außenumfang des Anschlussstutzens erhebt. Die durch Materialverdrängung gebildeten und zwischen benachbarten Nuten vorgesehenen Stege stehen bei dem aus US-A-4 330 142 vorbekannten Ausführungsbeispiel also derart über den Hülsen-Außenumfang des Anschlussstutzens vor und schneiden sich derart in das elastische Material des auf den Anschlussstutzen aufgeschobenen Schlauches ein, dass ein Relativverdrehen zwischen dem Anschlussstutzen einerseits und dem darauf aufgeschobenen Schlauchende andererseits verhindert wird. Erst durch eine übergroße Kraftanstrenung mag ein solches Relativverdrehen möglich sein, - wobei aber gleichzeitig das Risiko besteht, dass die durch Materialverdrängung gebildeten Stege sich in Umdrehungsrichtung verformen und anschließend einem Relativverdrehen in die entgegengesetzte Drehrichtung erst recht entgegenstehen.

Aus der US-A-2 139 745 kennt man eine hülsenförmige Schlauchkupplung, die an ihrem einen Kupplungsende einen Anschlussstutzen mit einer Halteprofilierung aufweist, auf welchen Anschlussstutzen ein Schlauchende eines flexiblen Schlauches aufschiebbar ist. Die Halteprofilierung wird durch aneinander gereihte Stutzenteilbereiche gebildet, die sich jeweils zum Stutzenende hin verjüngen und der Halteprofilierung dadurch eine gestufte Form geben. Diese Teilbereiche können durch in Längsrichtung orientierte säulenförmige Ausformungen des Stutzens unterbrochen sein. Das Schlauchende wird mittels einer Schlauchschelle auf den Anschlussstutzen gehalten. Eine solche Schelle presst das Schlauchende jedoch nur mit einem formbedingt begrenzten Anpressdruck in die Profilierung ein, weshalb die vorbekannte Schlauchkupplung höheren Belastungen eher nicht standhält.

Aus der prioritätsälteren, aber nachveröffentlichten WO 2014/139841 kennt man bereits eine Schlauchkupplung mit einem länglichen Anschlussstutzen, der zum Aufschieben des Schlauchendes einer flexiblen Schlauchleitung bestimmt ist. Da aber auch bei dieser Schlauchkupplung das Schlauchende lediglich mit einer Schlauchschelle auf dem Anschlussstutzen gehalten wird, vermag auch diese vorbekannte Schlauchkupplung höheren Belastungen nicht standzuhalten.

Es besteht daher die Aufgabe, eine Schlauchkupplung der eingangs erwähnten Art zu schaffen, die auch bei einer Drehbewegung der Schlauchleitung in Relation zum Anschlussstutzen weiterhin eine hohe Dichtigkeit und Belastbarkeit gewährleistet.

Die erfindungsgemäße Lösung dieser Aufgabe besteht bei der Schlauchkupplung der eingangs erwähnten Art darin, dass die Halteprofilierung ausschließlich durch am Außenumfang des Anschlussstutzens vorgesehene Haltenuten gebildet ist, wobei die Haltenuten jeweils als Einsenkung in dem Stutzen-Außenumfang des Anschlussstutzens ausgebildet sind, und dass die Haltenuten einen Nutgrund haben, der plan oder konkav ausgestaltet ist.

Bei der erfindungsgemäßen Schlauchkupplung wird die Halteprofilierung somit durch Haltenuten gebildet, die am Außenumfang des Anschlussstutzens vorgesehen sind. Die als Einsenkung am Stutzen-Außenumfang vorgesehenen Haltenuten weisen in Stutzen-Umfangsrichtung orientierte Nut-Längsseiten und in Stutzen-Längsrichtung orientierte Nut-Schmalseiten auf. Dabei sind zumindest in einem Teilbereich des Anschlussstutzens auf wenigstens zwei Umfangslinien angeordnete Haltenuten vorgesehen. In diese Haltenuten wird das innenumfangsseitige elastische Material des flexiblen Schlauches derart verdrängt, dass eine belastbare formschlüssige Verbindung zwischen Anschlussstutzen und dem Schlauchende der flexiblen Schlauchleitung gewährleistet ist. Dabei liegt der Innenumfang des Schlauchendes an dem die Haltenuten tragenden Außenumfang des Anschlussstutzens an. Damit der Schlauchinnenumfang besonders gut in die am Anschlussstutzen vorgesehenen und als Halteprofilierung dienenden Haltenuten eingedrückt wird, ist das auf das profilierte Kupplungsende aufgeschobene Schlauchende dort mittels einer das Schlauchende umspannenden Quetschhülse gehalten. Da auf vorstehende und sich außenumfangsseitig verjüngende Ringflansche verzichtet werden kann, ist ein stabilitätsminderndes Einschneiden des Schlauch-Innenumfangs nicht notwendig. Um die erfindungsgemäße Halteprofilierung an einem möglichst langen Stutzen-Teilbereich vorzusehen, ist erfindungsgemäß vorgesehen, dass die einander zugewandten Nut-Längsseiten der auf benachbarten Umfangslinien angeordneten Haltenuten voneinander beabstandet sind. Die erfindungsgemäße Schlauchkupplung zeichnet sich selbst dann durch eine hohe Dichtigkeit, Belastbarkeit und Berstsicherheit aus, wenn die Schlauchleitung in Relation zur Schlauchkupplung verdreht wird.

Um auch ein höheres Drehmoment auf die zwischen dem Anschlussstutzen und dem auf den Anschlussstutzen aufgeschobenen Schlauchende zu gewährleisten, ist es erfindungsgemäß vorgesehen, dass die Haltenuten einen Nutgrund haben, der plan oder konkav ausgestaltet ist. Auf einen derart unrunden Verbindungsbereich zwischen dem Anschlussstutzen einerseits und der auf ihn aufgeschobenen Schlauchleitung andererseits können auch höhere Drehmomente übertragen und abgeführt werden.

Damit die Haltenuten nicht ineinander übergehen, ist es vorteilhaft, wenn die Halteprofilierung zumindest zwei Haltenuten hat, deren benachbarte Nut-Schmalseiten voneinander beanstandet sind. Sind die Nut-Schmalseiten der einander benachbarten Haltenuten voneinander beanstandet, wird einer Drehbewegung zwischen dem Anschlussstutzen einerseits und dem darauf aufgeschobenen Schlauchende andererseits mit Sicherheit vermieden.

Die Übertragbarkeit auch hoher Drehmomente auf die zwischen Anschlussstutzen und Schlauchleitung vorgesehene Verbindung wird noch begünstigt, wenn die Halteprofilierung zumindest zwei, etwa auf einer gemeinsamen Umfangslinie angeordnete Haltenuten aufweist.

Dabei sieht eine besonders einfache und mit vergleichsweise geringem Aufwand herstellbare Ausführungsform gemäß der Erfindung vor, dass die auf einer gemeinsamen Umfangslinie angeordneten Haltenuten in gleichmäßigen Abständen über den Stutzen-Umfang verteilt angeordnet sind.

Die einfache Herstellbarkeit und die hohe Belastbarkeit der mit der erfindungsgemäßen Schlauchkupplung zwischen Anschlussstutzen und Schlauchende vorgesehenen Verbindung ist insbesondere dann besonders fest und belastbar, wenn die auf einer gemeinsamen Umfangslinie angeordneten Haltenuten einen dreieckigen, viereckigen, sechseckigen oder mehreckigen Stutzenquerschnitt definieren.

Dabei sieht eine Ausführungsform gemäß der Erfindung vor, dass die auf benachbarten Umfangslinien angeordneten Haltenuten in achsparallel zur Stutzen-Längsachse angeordneten Linien vorgesehen sind.

Eine demgegenüber andere Ausführungsform gemäß der Erfindung sieht vor, dass die auf benachbarten Umfangslinien angeordneten Haltenuten versetzt zueinander angeordnet sind. Dabei ist es besonders vorteilhaft, wenn die auf benachbarten Umfangslinien angeordneten Haltenuten derart versetzt zueinander angeordnet sind, dass benachbarte Nut-Schmalseiten von auf einer gemeinsamen Umfangslinie angeordneten Haltenuten etwa mittig zu einer auf einer benachbarten Umfangslinie vorgesehenen Haltenut angeordnet sind.

Um das freie Schlauchende auf den erfindungsgemäß ausgebildeten Anschlussstutzen der Schlauchkupplung leicht aufschieben zu können, ist es zweckmäßig, wenn der Anschlussstutzen einen außenumfangsseitig nutfreien Stirnendbereich hat.

Ein leichtes Aufschieben des freien Schlauchendes auf den Anschlussstutzen der erfindungsgemäßen Schlauchkupplung wird begünstigt, wenn der nutfreie Stirnendbereich sich zum Stirnende des Anschlussstutzens hin vorzugsweise konisch verjüngt.

Weiterbildungen gemäß der Erfindung ergeben sich aus den Ansprüchen in Verbindung mit den Figuren sowie der Beschreibung. Nachstehend wird die Erfindung anhand bevorzugter Ausführungsbeispiele noch näher beschrieben.

Es zeigt:
- Fig. 1: eine perspektivisch dargestellte Schlauchkupplung, die einen Anschlussstutzen hat, der zumindest in einem Stutzen-Teilbereich außenumfangsseitig eine Halteprofilierung aufweist, welche Halteprofilierung durch eine Vielzahl von Haltenuten gebildet ist,
- Fig. 2: eine gemäß Figur 1 ausgebildete Schlauchkupplung in einem Längsschnitt, auf deren Anschlussstutzen ein Schlauchende einer flexiblen Schlauchleitung aufgeschoben ist, wobei das Schlauchende auf dem Anschlussstutzen mittels einer Quetschhülse gehalten ist, die das Schlauchende im Bereich des profilierten Kupplungsendes umspannt,
- Fig. 3: die Schlauchkupplung aus Figur 2 in einem in Umfangsrichtung geringfügig gedrehten Längsschnitt,
- Fig. 4: die bereits in Figur 2 und 3 gezeigte Schlauchkupplung mit dem von der Quetschhülse umspannten Schlauchende in einem Längsschnitt,
- Fig. 5: die Schlauchkupplung aus den Figuren 2 bis 4 in einem Querschnitt durch Schnittebene V-V,
- Fig. 6: den Anschlussstutzen einer Schlauchkupplung in einem Teil-Längsschnitt, wobei der Anschlussstutzen eine Vielzahl von Haltenuten trägt, die auf benachbarten Umfangslinien in achsparallel zur Stutzen-Längsachse angeordneten Linien vorgesehen sind,
- Fig. 7: einen schematisch dargestellten Querschnitt durch den Anschlussstutzen gemäß Figur 6, wobei die Schnittlinie des in Figur 6 gezeigten Teil-Längsschnittes verdeutlicht wird,
- Fig. 8: den Anschlussstutzen aus Figur 6 und 7 in einer Seitenansicht,
- Fig. 9: den Anschlussstutzen aus Figur 6 bis 8 in einer perspektivischen Seitenansicht mit Blick auf das freie Stutzenende dieses Anschlussstutzens,
- Fig. 10: einen Anschlussstutzen mit einer, aus einer Vielzahl von Haltenuten angeordneten Halteprofilierung, wobei diese auf benachbarten Umfangslinien angeordneten Haltenuten versetzt zueinander angeordnet sind,
- Fig. 11: den Anschlussstutzen aus Figur 10 in einer perspektivischen Unteransicht auf das freie Stutzenende,
- Fig. 12: einen mit Figur 6 bis 9 vergleichbar ausgestalteten Anschlussstutzen in einer Seitenansicht,
- Fig. 13: den Anschlussstutzen aus Figur 12 in einer perspektivischen Unteransicht auf das freie Stutzenende,
- Fig. 14: einen mit Figur 10 vergleichbar ausgestalteten Anschlussstutzen in einer Seitenansicht und
- Fig. 15: den Anschlussstutzen aus Figur 14 in einer perspektivischen Unteransicht auf das freie Stutzenende.

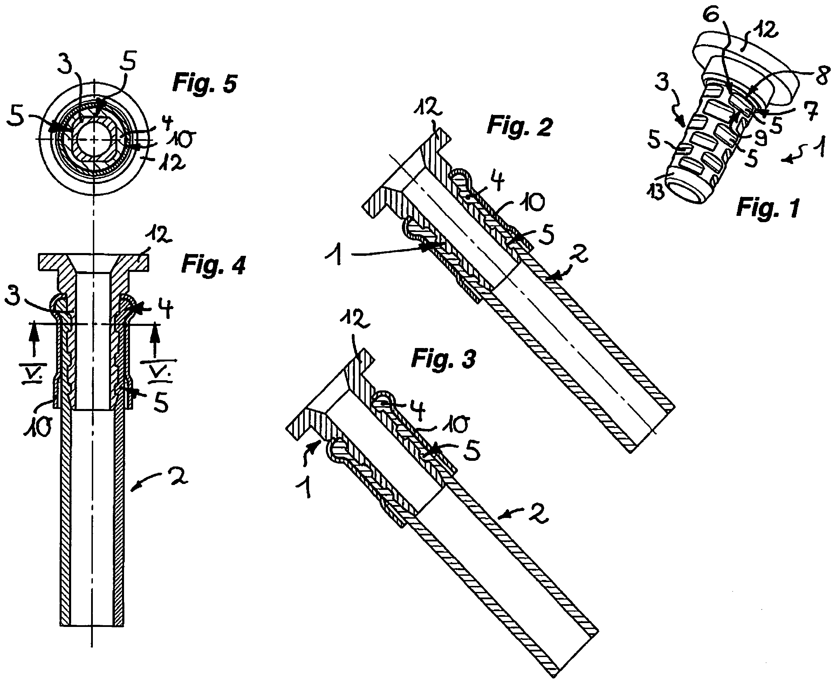

In den Figuren 1 bis 5 ist eine Schlauchkupplung 1 dargestellt, die zum Anschluss eines flexiblen Schlauches 2 beispielsweise an einem Eckventil oder an einer sanitären Auslaufarmatur oder dergleichen Wasserverbrauchstelle dient. Die Schlauchkupplung 1, die hülsenförmig ausgestaltet ist, weist an wenigstens einem Kupplungsende einen Anschlussstutzen 3 auf, der zumindest in einem Stutzen-Teilbereich außenumfangsseitig eine Halteprofilierung trägt.

Wie in den Figuren 2 bis 5 erkennbar ist, ist auf das zumindest eine profilierte Kupplungsende ein Schlauchende 4 des flexiblen Schlauches 2 aufschiebbar. Die am Anschlussstutzen 3 der Schlauchkupplung 1 vorgesehene Halteprofilierung wird durch wenigstens eine und vorzugsweise - wie hier - durch eine Mehrzahl von Haltenuten 5 gebildet, die am Außenumfang des Anschlussstutzens 3 vorgesehen sind. Jede dieser, als Einsenkung in den Stutzen-Außenumfang ausgebildeten Haltenuten 5 weist in Stutzen-Längsrichtung orientierte Nut-Schmalseiten 6, 7 und in Stutzen-Umfangsrichtung orientierte Nut-Längsseiten 8, 9 auf.

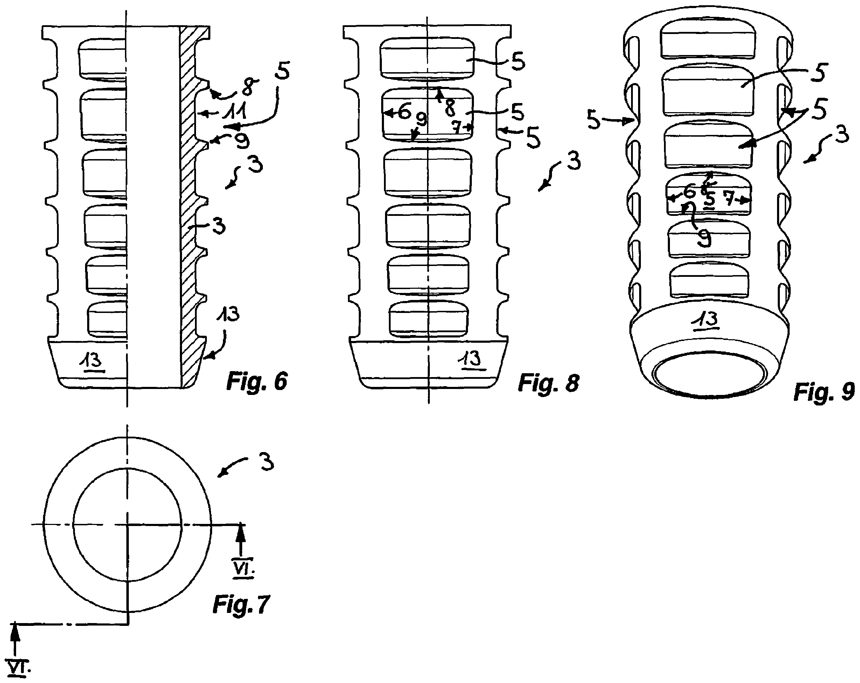

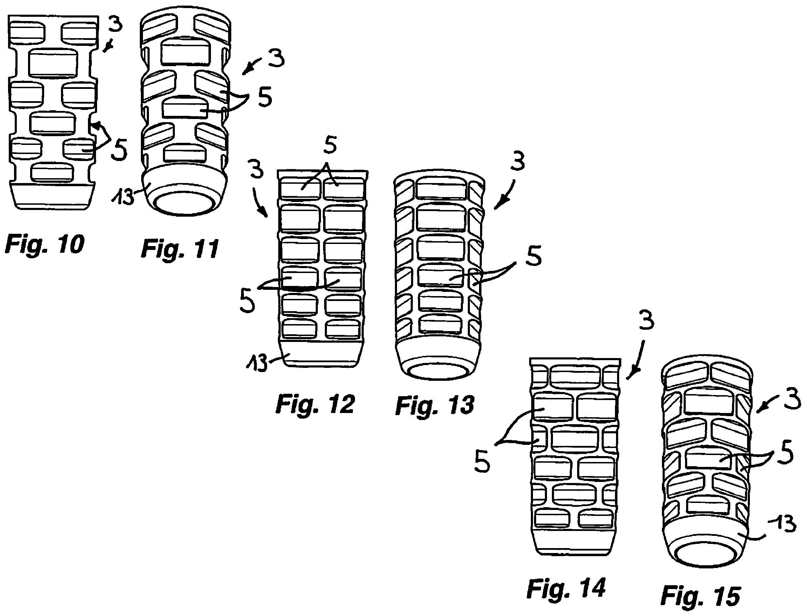

Jeweils eine Teilmenge der Haltenuten 5 ist auf einer gemeinsamen Stutzen-Umfangslinie angeordnet. Dabei sind die benachbarten Nut-Schmalseiten 6, 7 einander angrenzender Haltenuten 5 voneinander beabstandet. Während die auf einer der Umfangslinien angeordneten Haltenuten 5 bei dem in Figur 6 bis 9 gezeigten Anschlussstutzen einen viereckigen Stutzenquerschnitt definieren, bilden die entsprechenden auf einer der Umfangslinien angeordneten Haltenuten 5 der in den Figuren 12 bis 15 gezeigten Ausführungen einen sechseckigen Stutzenquerschnitt. In den Figuren 6 bis 9 und 12 bis 13 ist erkennbar, dass die auf benachbarten Umfangslinien angeordneten Haltenuten 5 in achsparallel zur Stutzen-Längsachse angeordneten Linien vorgesehen sein können. Demgegenüber ist aus den Figuren 1, 10 bis 11 und 14 bis 15 erkennbar, dass die auf benachbarten Umfangslinien angeordneten Haltenuten 5 auch derart versetzt zueinander angeordnet sein können, dass benachbarte Nut-Schmalseiten 6, 7 von auf einer gemeinsamen Umfangslinie angeordneten Haltenuten 5 etwa mittig zu einer auf einer benachbarten Umfangslinie vorgesehenen Haltenut 5 angeordnet sind.

In den Figuren 1, 6 und 8 bis 15 ist erkennbar, dass der Anschlussstutzen einen außenumfangsseitig nutfreien Stirnendbereich 13 aufweisen kann. Um das Schlauchende 4 des flexiblen Schlauches 2 leicht und mit geringem Aufwand auf den Anschlussstutzen 3 aufschieben zu können, ist es vorteilhaft, wenn der nutfreie Stirnendbereich 13 sich zum Stirnende hin vorzugsweise konisch verjüngt. Damit das elastische Material des flexiblen Schlauches 2 sich gut in die als Halteprofilierung dienenden Haltenuten 5 eingraben kann, ist eine Quetschhülse 10 vorgesehen, die das auf das profilierte Kupplungsende aufgeschobene Schlauchende 4 des Schlauches 2 umspannt. Diese Quetschhülse 10 ist von einer hier nicht weiter gezeigten erweiterten Ausgangsstellung in die in den Figuren 2 bis 4 gezeigte Halteposition verringerten Querschnitts verformbar oder umformbar. Die Schlauchkupplung 1 kann an ihrem den Anschlussstutzen 3 abgewandten Kupplungsende ein Anschlussgewinde tragen. Die hier dargestellten Schlauchkupplungen 1 weisen demgegenüber an ihrem den Anschlussstutzen 3 abgewandten Kupplungsende einen Ringflansch 12 auf, der von einer hier nicht weiter gezeigten Überwurfmutter hintergriffen wird und deren Durchstecköffnung der Anschlussstutzen 3 durchsetzt. Um die freien Schlauchenden zweier benachbarter flexibler Schlauchleitungen miteinander verbinden zu können, kann die Schlauchkupplung auch an ihren beiden Kupplungsenden jeweils einen Anschlussstutzen aufweisen.

### Bezugszeichenliste

- 1: Schlauchkupplung
- 2: Schlauch
- 3: Anschlussstutzen
- 4: Schlauchende
- 5: Haltenut
- 6: Nut-Schmalseite
- 7: Nut-Schmalseite
- 8: Nut-Längsseite
- 9: Nut-Längsseite
- 10: Quetschhülse
- 11: Nutgrund
- 12: Ringflansch
- 13: nutfreier Stirnendbereich

## Patentansprüche

1. Schlauchkupplung (1), die hülsenförmig ausgestaltet ist, und die an wenigstens einem Kupplungsende einen Anschlussstutzen (3) mit einer, zumindest in einem Stutzen-Teilbereich außenumfangsseitig vorgesehenen Halteprofilierung aufweist, die ausschließlich durch am Außenumfang des Anschlussstutzens (3) vorgesehene Haltenuten (5) gebildet ist, die in Stutzen-Umfangsrichtung orientierte Nut-Längsseiten (8, 9) und in Stutzen-Längsrichtung orientierte Nut-Schmalseiten (6, 7) haben, wobei auf das Kupplungsende ein Schlauchende (4) eines flexiblen Schlauches (2) aufschiebbar und dort mittels einer das Schlauchende (4) umspannenden Quetschhülse gehalten werden kann, und wobei zumindest in einem Teilbereich des Anschlussstutzens (3) auf wenigstens zwei Umfangslinien angeordnete Haltenuten (5) vorgesehen sind, wobei die einander zugewandten Nut-Längsseiten (8, 9) der auf benachbarten Umfangslinien angeordneten Haltenuten (5) voneinander beabstandet sind, wobei die Haltenuten (5) jeweils als Einsenkung in dem Stutzen-Außenumfang des Anschlussstutzens (3) ausgebildet sind, und die Haltenuten (5) einen Nutgrund (11) haben, der plan oder konkav ausgestaltet ist.

2. Schlauchkupplung nach Anspruch 1, **dadurch gekennzeichnet, dass** die die Halteprofilierung zumindest zwei Haltenuten (5) hat, deren benachbarte Nut-Schmalseiten (6, 7) voneinander beabstandet sind.

3. Schlauchkupplung nach Anspruch 1 oder 2, **dadurch gekennzeichnet, dass** die Halteprofilierung zumindest zwei, etwa auf einer gemeinsamen Umfangslinie angeordnete Haltenuten (5) aufweist.

4. Schlauchkupplung nach Anspruch 3, **dadurch gekennzeichnet, dass** die auf einer gemeinsamen Umfangslinie angeordneten Haltenuten (5) in gleichmäßigen Abständen über den Stutzen-Umfang verteilt angeordnet sind.

5. Schlauchkupplung nach Anspruch 3 oder 4, **dadurch gekennzeichnet, dass** die auf einer gemeinsamen Umfangslinie angeordneten Haltenuten (5) einen dreieckigen, viereckigen, sechseckigen oder polygonen Stutzenquerschnitt definieren.

6. Schlauchkupplung nach einem der Ansprüche 3 bis 5, **dadurch gekennzeichnet, dass** die auf benachbarten Umfangslinien angeordneten Haltenuten (5) in achsparallel zur Stutzen-Längsachse angeordneten Linien vorgesehen sind.

7. Schlauchkupplung nach einem der Ansprüche 3 bis 5, **dadurch gekennzeichnet, dass** die auf benachbarten Umfangslinien angeordneten Haltenuten (5) versetzt zueinander angeordnet sind.

8. Schlauchkupplung nach Anspruch 7, **dadurch gekennzeichnet, dass** die auf benachbarten Umfangslinien angeordneten Haltenuten (5) derart versetzt zueinander angeordnet sind, dass benachbarte Nut-Schmalseiten (6, 7) von auf einer gemeinsamen Umfangslinie angeordneten Haltenuten (5) etwa mittig zu einer auf einer benachbarten Umfangslinie vorgesehenen Haltenut (5) angeordnet sind.

9. Schlauchkupplung nach einem der Ansprüche 1 bis 8, **dadurch gekennzeichnet, dass** der Anschlussstutzen einen außenumfangsseitig nutfreien Stirnendbereich (13) hat.

10. Schlauchkupplung nach Anspruch 9, **dadurch gekennzeichnet, dass** der nutfreie Stirnendbereich (13) des Anschlussstutzens (3) sich zum Stirnende hin vorzugsweise konisch verjüngt.

## Claims

1. Hose coupling (1) formed in a sleeve-like manner and comprising, on at least one coupling end, a connection fitting (3) having a holding profile provided on the outer periphery at least in a fitting partial region and being formed exclusively by holding grooves (5) provided on the outer periphery of the connection fitting (3), which holding grooves have groove long-sides (8, 9) oriented in the fitting peripheral direction and groove narrow sides (6, 7) orientated in the fitting longitudinal direction, wherein a hose end (4) of a flexible hose (2) can be pushed onto the coupling end and can be held at that location by means of a ferrule embracing the hose end (4), and wherein at least in a partial region of the connection fitting (3) holding grooves (5) disposed on at least two peripheral lines are provided, wherein the mutually facing groove long sides (8, 9) of the holding grooves (5) disposed on adjacent peripheral lines are spaced apart from one another, wherein the holding grooves (5) are each formed as an indentation in the fitting outer periphery of the connection fitting (3), and the holding grooves (5) have a groove base (11) which is planar or concave.

2. Hose coupling as claimed in claim 1, **characterised in that** the holding profile has at least two holding grooves (5), the adjacent groove narrow sides (6, 7) of which are spaced apart from one another.

3. Hose coupling as claimed in claim 1 or 2, **characterised in that** the holding profile comprises at least two holding grooves (5) disposed approximately on a common peripheral line.

4. Hose coupling as claimed in claim 3, **characterised in that** the holding grooves (5) disposed on a common peripheral line are disposed distributed at uniform distances over the fitting periphery.

5. Hose coupling as claimed in claim 3 or 4, **characterised in that** the holding grooves (5) disposed on a common peripheral line define a triangular, rectangular, hexagonal or polygonal fitting cross-section.

6. Hose coupling as claimed in any one of claims 3 to 5, **characterised in that** the holding grooves (5) disposed on adjacent peripheral lines are provided in lines disposed axially parallel with the longitudinal axis of the fitting.

7. Hose coupling as claimed in any one of claims 3 to 5, **characterised in that** the holding grooves (5) disposed on adjacent peripheral lines are disposed offset from one another.

8. Hose coupling as claimed in claim 7, **characterised in that** the holding grooves (5) disposed on adjacent peripheral lines are disposed offset from one another in such a way that adjacent narrow groove sides (6, 7) of holding grooves (5) disposed on a common peripheral line are disposed approximately centrally with respect to a holding groove (5) provided on an adjacent peripheral line.

9. Hose coupling as claimed in any one of claims 1 to 8, **characterised in that** the connection fitting has an end-face region (13) without grooves on the outer peripheral side.

10. Hose coupling as claimed in claim 9, **characterised in that** the grooveless end-face region (13) of the connection fitting (3) preferably tapers conically towards the end face.

## Revendications

1. Raccord pour tuyau flexible (1), qui est réalisé en forme de douille, et qui présente à au moins une extrémité de raccord un embout de raccord (3) avec un profilage de retenue prévu en périphérie extérieure au moins dans une région partielle de l'embout et qui est formé exclusivement par des gorges de retenue (5) prévues sur la périphérie extérieure de l'embout de raccord (3), qui comportent des côtés longs de gorge (8, 9) orientés dans la direction périphérique de l'embout et des côtés étroits de gorge (6, 7) orientés dans la direction longitudinale de l'embout, dans lequel une extrémité de tuyau flexible (4) d'un tuyau flexible (2) peut être glissée sur l'extrémité de raccord et y être maintenue au moyen d'une douille de pinçage serrant l'extrémité de tuyau flexible (4), et dans lequel il est prévu au moins dans une région partielle de l'embout de raccord (3) des gorges de retenue (5) disposées sur au moins deux lignes périphériques, dans lequel les côtés longs de gorge (8, 9) tournés l'un vers l'autre des gorges de retenue (5) disposées sur deux lignes périphériques voisines sont espacés l'un de l'autre, dans lequel les gorges de retenue (5) sont réalisées respectivement sous la forme d'un enfoncement dans la périphérie extérieure d'embout de l'embout de raccord (3) et les gorges de retenue (5) comportent un fond de gorge (11), qui est de forme plane ou concave.

2. Raccord pour tuyau flexible selon la revendication 1, **caractérisé en ce que** le profilage de retenue comporte au moins deux gorges de retenue (5), dont les côtés étroits de gorge voisins (6, 7) sont espacés l'un de l'autre.

3. Raccord pour tuyau flexible selon la revendication 1 ou 2, **caractérisé en ce que** le profilage de retenue présente au moins deux gorges de retenue (5) disposées environ sur une ligne périphérique commune.

4. Raccord pour tuyau flexible selon la revendication 3, **caractérisé en ce que** les gorges de retenue (5) disposées sur une ligne périphérique commune sont disposées de façon répartie à des distances uniformes sur la périphérie de l'embout.

5. Raccord pour tuyau flexible selon la revendication 3 ou 4, **caractérisé en ce que** les gorges de retenue (5) disposées sur une ligne périphérique commune définissent une section transversale d'embout triangulaire, quadrangulaire, hexagonale ou polygonale.

6. Raccord pour tuyau flexible selon l'une quelconque des revendications 3 à 5, **caractérisé en ce que** les gorges de retenue (5) disposées sur des lignes périphériques voisines sont prévues dans des lignes disposées de façon axialement parallèle à l'axe longitudinal de l'embout.

7. Raccord pour tuyau flexible selon l'une quelconque des revendications 3 à 5, **caractérisé en ce que** les gorges de retenue (5) disposées sur des lignes périphériques voisines sont disposées en décalage l'une par rapport à l'autre.

8. Raccord pour tuyau flexible selon la revendication 7, **caractérisé en ce que** les gorges de retenue (5) disposées sur des lignes périphériques voisines sont disposées en décalage l'une par rapport à l'autre, de telle manière que des côtés étroits de gorge voisins (6, 7) de gorges de retenue (5) disposées sur une ligne périphérique commune soient disposés environ au milieu d'une gorge de retenue (5) prévue sur une ligne périphérique voisine.

9. Raccord pour tuyau flexible selon l'une quelconque des revendications 1 à 8, **caractérisé en ce que** l'embout de raccord comporte une région d'extrémité frontale sans gorge (13) en périphérie extérieure.

10. Raccord pour tuyau flexible selon la revendication 9, **caractérisé en ce que** la région d'extrémité sans gorge (13) de l'embout de raccord (3) s'amincit de préférence en cône en direction de l'extrémité frontale.
